Europäisches Patentamt

European Patent Office

Office européen des brevets

(19)

(11) Numéro de publication : **0 300 853 B1**

(12)                     FASCICULE DE BREVET EUROPEEN

(45) Date de publication du fascicule du brevet :
18.09.91 Bulletin 91/38

(51) Int. Cl.⁵ : **C01F 17/00**

(21) Numéro de dépôt : **88401595.9**

(22) Date de dépôt : **24.06.88**

(54) Procédé d'obtention d'un oxyde cérique.

(30) Priorité : 29.06.87 FR 8709122
15.06.88 FR 8807992

(43) Date de publication de la demande :
25.01.89 Bulletin 89/04

(45) Mention de la délivrance du brevet :
18.09.91 Bulletin 91/38

(84) Etats contractants désignés :
AT BE CH DE ES FR GB GR IT LI LU NL SE

(56) Documents cités :
EP-A- 0 153 227
EP-A- 0 207 857
EP-A- 0 208 580

(56) Documents cités :
EP-A- 0 239 477
EP-A- 0 239 478
EP-A- 0 239 479
FR-A- 2 593 195

(73) Titulaire : RHONE-POULENC CHIMIE
25, quai Paul Doumer
F-92408 Courbevoie Cédex (FR)

(72) Inventeur : Le Loarer, Jean-Luc
24, rue du Général Guillaumat
F-17000 La Rochelle (FR)

(74) Mandataire : Dutruc-Rosset, Marie-Claude et al
RHONE-POULENC INTERSERVICES Service Brevets Chimie 25, Quai Paul Doumer
F-92408 Courbevoie Cédex (FR)

EP 0 300 853 B1

Jouve, 18, rue Saint-Denis, 75001 PARIS

EP 0 300 853 B1

## Description

La présente invention a trait à un nouveau procédé d'obtention d'un oxyde cérique à grande surface spécifique à température élevée.

Dans l'exposé qui suit de l'invention, on entend par surface spécifique, la surface spécifique B.E.T. déterminée par adsorption d'azote conformément à la norme ASTM D 3663-78 établie à partir de la méthode BRUNAUER—EMMETT—TELLER décrite dans le périodique "The Journal of American Society, 60, 309 (1938)".

Il est connu que l'oxyde cérique peut être utilisé en tant que catalyseur ou support de catalyseur. On peut citer par exemple, les travaux de Paul MERIAUDEAU et Coll. relatifs à la synthèse du méthanol à partir de CO + $H_2$ sur des catalyseurs au platine déposé sur de l'oxyde cérique. (C.R. Acad. Sc. Paris t. 297 — Série II-471 — 1983).

Il est également bien connu que l'efficacité d'un catalyseur est généralement d'autant plus grande que la surface du contact entre le catalyseur et les réactifs est grande. Pour ce faire, il est nécessaire que le catalyseur soit maintenu en un état le plus divisé possible, c'est-à-dire que les particules solides qui le composent soient aussi petites et individualisées que possible. Le rôle fondamental du support est donc de maintenir les particules de catalyseur ou cristallites au contact des réactifs, à l'état le plus divisé possible.

Lors de l'emploi prolongé d'un support de catalyseur, il se produit une diminution de la surface spécifique due à la coalescence des micropores très fins. Au cours de cette coalescence, une partie du catalyseur est englobée dans la masse du support et ne peut plus être en contact avec les réactifs.

Jusqu'à présent, la plupart des oxydes cériques préparés présentent une surface spécifique qui décroit rapidement pour des températures de fonctionnement supérieures à 500°C. Ainsi, R. ALVERO et coll. (J. Chem. Soc. Dalton Trans 1984, 87) ont obtenu à partir de cérinitrate d'ammonium, un oxyde cérique présentant après calcination à une température de 600°C, une surface spécifique de 29 m²/g.

Par ailleurs, on a décrit dans FR-A 2559754 un oxyde cérique présentant une surface spécifique d'au moins 85 ± 5 m²/g obtenue après calcination entre 350 et 450°C et, de préférence, située entre 100 et 130 m²/g après calcination entre 400 et 450°C. Ledit oxyde est préparé par hydrolyse d'une solution aqueuse de nitrate cérique en milieu acide nitrique, puis séparation du précipité obtenu, lavage à l'aide d'un solvant organique, éventuellement séchage, puis calcination. L'oxyde cérique obtenu présente une surface spécifique intéressante lorsqu'il est préparé dans une gamme de température de calcination allant de 300 à 600°C. Toutefois, on note une chute de la surface spécifique après calcination à une température plus haute, la surface spécifique étant de 10 m²/g, après calcination à 800°C.

On peut également citer FR-A 2559755 qui concerne un oxyde cérique présentant une surface spécifique d'au moins 85 ± 5 m²/g après calcination entre 350 et 500°C et, de préférence, située entre 150 et 180 m²/g après calcination entre 400 et 450°C. Cet oxyde est obtenu selon un procédé qui consiste à précipiter un sulfate basique cérique en faisant réagir une solution aqueuse de nitrate cérique et une solution aqueuse contenant des ions sulfate, à séparer le précipité obtenu, à le laver à l'aide d'une solution d'ammoniaque, éventuellement à le sécher puis à le calciner à une température variant entre 300 et 500°C. L'oxyde cérique ainsi préparé présente une grande surface spécifique, mais lorsqu'il est soumis à une opération de calcination à 800°C, sa surface spécifique décroit considérablement et se situe vers 10 m²/g.

Dans la demande de brevet français n° 87/09122, la demanderesse a décrit un procédé pour accroître et stabiliser à haute température, la surface spécifique d'un oxyde cérique.

Ce procédé consiste à soumettre l'hydroxyde cérique, précurseur d'oxyde cérique, à un traitement solvothermal avant l'opération de calcination.

Plus particulièrement, le procédé décrit dans ladite demande consiste :
— à mettre l'hydroxyde cérique en suspension dans un milieu liquide,
— à le chauffer dans une enceinte close jusqu'à une température et une pression inférieures respectivement à la température critique et à la pression critique dudit milieu,
— à refroidir le milieu réactionnel et à le ramener à la pression atmosphérique,
— à séparer l'hydroxyde cérique ainsi traité,
— puis à le calciner.

On entend par hydroxyde cérique, un oxyde cérique hydraté $CeO_2$, $2H_2O$ ou bien un hydroxyde cérique pouvant contenir des quantités résiduelles d'anions liés ou adsorbés tels que, par exemple, chlorures, sulfates, nitrates, acétates, formiates, etc...

Un mode de réalisation préférentiel du procédé décrit dans la demande de brevet FR 87/09122 consiste à faire appel à une solution de base, comme milieu liquide d'autoclavage.

Un tel procédé permet non seulement d'accroître la surface spécifique de l'oxyde cérique obtenu, mais également de conserver une surface spécifique élevée jusqu'à des températures de 900°C.

En soumettant un hydroxyde cérique préparé en faisant réagir une solution de sel de cérium et une base

2

éventuellement en présence d'un agent oxydant, dans des conditions de pH supérieur à 7, à un traitement d'autoclavage en milieu basique, la demanderesse propose selon la demande de brevet FR 87/09122, un oxyde cérique présentant une surface spécifique à 800-900°C jamais atteinte par les produits décrits dans l'état de la technique.

L'oxyde cérique ainsi obtenu présente une surface spécifique d'au moins 15 m²/g mesurée après calcination à une température comprise entre 800 et 900°C et, de préférence, comprise entre 20 et 35 m²/g mesurée après calcination à une température de 800°C.

Il présente une surface spécifique comprise entre 15 et 150 m²/g mesurée après calcination à une température comprise entre 350 et 900°C.

C'est ainsi qu'il peut présenter une surface spécifique variant entre 100 et 150 m²/g mesurée après calcination entre 350 et 450°C.

Toutefois, lorqu'il sera soumis à une température plus élevée pouvant atteindre 900°C, au moment de son utilisation, notamment dans le domaine de la catalyse, il présente la caractéristique de conserver une surface spécifique d'au moins 15 m²/g.

Dans la présente demande, les surfaces spécifiques exprimées sont mesurées sur un produit ayant subi une calcination d'au moins 2 heures à la température donnée.

Une autre caractéristique de l'oxyde cérique, objet de la demande de brevet FR 87/09122, est qu'il présente un volume poreux supérieur à 0,1 cm³/g à une température de mesure comprise entre 800 et 900°C et, de préférence, supérieur à 0,15 cm³/g.

Le volume poreux correspondant aux pores de diamètre inférieur à 60 nm (600 Å) est mesuré au porosimètre à mercure selon la norme ASTM D4284-83 ou suivant la méthode des isothermes d'adsorption d'azote, méthode B.E.T. précitée.

Comme la surface spécifique, le volume poreux dépend de la température de calcination : il peut varier entre 0,35 et 0,15 cm³/g pour une température de calcination allant de 350 à 900°C.

L'oxyde cérique préféré, objet de la demande de brevet FR 87/09122 présente un volume poreux compris entre 0,15 et 0,25 cm³/g après calcination à une température de 800°C.

La taille des pores d'un oxyde cérique calciné à 800°C s'échelonne entre 3 nm (30 Å) et 6nm (600 Å) : le diamètre moyen ($d_{50}$) des pores varie entre 20 nm (200 Å) et 30 nm (300 Å), de préférence, aux environs de 25 nm (250 Å).

On définit le diamètre moyen comme étant un diamètre tel que tous les pores inférieurs à ce diamètre constituent 50% du volume poreux (Vp) total des pores de diamètre inférieur à 60 nm (600 Å).

Un oxyde cérique calciné à 350°C présente des pores de 2 nm (20 Å) à 100 nm (1000 Å) : le diamètre moyen variant de 10 nm (100 Å) à 20 nm (200 Å) et, de préférence, voisin de 15 nm (150 Å).

L'analyse par diffraction X montre que l'oxyde cérique, objet de la demande de brevet FR 87/09122 présente une phase cristalline de type $CeO_2$ ayant un paramètre de maille variante de 0,542 nm (5,42 Å) à 0.544 nm (5,44 Å). A titre indicatif, on précisera que la taille des cristallites d'un oxyde cérique obtenu après calcination à 350°C se situe entre 4 nm (40 Å) et 6 nm (60 Å) et après calcination à 800°C, entre 10 nm (100 Å) et 20 nm (200 Å).

Poursuivant ses recherches, la demanderesse est parvenue à obtenir un oxyde cérique ayant une surface spécifique pouvant atteindre entre 20 et 60 m²/g, mesurée après calcination à une température de 800°C, ledit oxyde pouvant présenter une surface spécifique variant entre 70 et 160 m²/g, de préférence entre 100 et 160 m²/g, mesurée après calcination entre 350°C et 450°C.

Au cours de ses recherches, la demanderesse a trouvé un autre procédé d'obtention dudit oxyde cérique et il constitue l'objet de la présente invention.

La présente invention a donc pour objet un procédé d'obtention d'un oxyde cérique présentant une surface spécifique d'au moins 15 m²/g mesurée après calcination à une température comprise entre 800°C et 900°C caractérisé par le fait qu'il consiste :

— à mettre en suspension dans l'eau ou dans une solution aqueuse d'une base décomposable, un hydroxyde cérique répondant à la formule générale (I)

$$Ce(OH)_x(NO_3)_y, pCeO_2, nH_2O \quad (I)$$

dans laquelle :
— x est tel que x = 4 − y
— y est compris entre 0,35 et 1,5
— p est supérieur ou égal à 0 et inférieur ou égal à 2,0
— n est supérieur ou égal à 0 et inférieur ou égal à environ 20
— à le chauffer dans une enceinte close jusqu'à une température et une pression inférieures respectivement à la température critique et à la pression critique dudit milieu,
— à refroidir le milieu réactionnel et à le ramener à la pression atmosphérique,
— à séparer l'hydroxyde cérique ainsi traité,
— puis à le calciner.

La demanderesse a trouvé qu'un oxyde cérique à grande surface spécifique à température élevée pouvait être obtenu en soumettant un hydroxyde cérique ou hydrate d'oxyde cérique obtenu par hydrolyse d'un sel nitrate de cérium IV, à un traitement d'autoclavage effectué en milieu liquide qui peut être aussi bien de l'eau qu'une solution aqueuse d'une base décomposable.

Intervient donc dans le procédé de l'invention, un hydroxyde cérique répondant à la formule (I). Celui-ci fait l'objet de la demande de brevet EP-A 0239477.

Il s'agit, plus précisément, d'un hydroxynitrate de cérium IV qui possède la propriété de se peptiser, c'est-à-dire de donner un sol par simple mise en dispersion dans l'eau.

Pour le choix de l'hydroxyde cérique mis en oeuvre dans le procédé de l'invention, on fait appel, de préférence, à un composé répondant à la formule (I) dans lequel p est égal à 0. Il répond, de préférence, à la formule (Ia) suivante :

$$Ce(OH)_x(NO_3)_y,nH_2O \quad (Ia)$$

dans laquelle :
— x est tel que x = 4 − y
— y est compris entre 0,35 et 0,7
— n est supérieur à 0 et inférieur ou égal à environ 20

Encore plus préférentiellement, on met en oeuvre dans le procédé de l'invention, un composé répondant à la formule (Ia) dans lequel n est supérieur à 0 et inférieur à environ 10.

L'hydroxyde cérique répondant à la formule (I) qui est mis en oeuvre selon l'invention est préparé selon un procédé qui consiste à hydrolyser une solution aqueuse d'un sel de cérium IV en milieu acide, à séparer le précipité obtenu et éventuellement à le traiter thermiquement.

Dans la première étape, on réalise l'hydrolyse d'une solution aqueuse d'un sel de cérium IV.

A cet effet, on part d'une solution de cérium IV qui peut être une solution aqueuse de nitrate cérique. Ladite solution peut contenir sans inconvénient du cérium à l'état céreux mais il est souhaitable pour avoir un bon rendement de précipitation qu'elle contienne au moins 85% de cérium IV.

La solution de sel de cérium est choisie de telle sorte qu'elle ne contienne pas d'impuretés qui puissent se retrouver, dans le produit final. Il peut être avantageux de mettre en jeu une solution de sel de cérium présentant un degré de pureté supérieur à 99%.

La concentration de la solution de sel de cérium n'est pas un facteur critique, selon l'invention. Lorsqu'elle est exprimée en céreium IV, elle peut varier entre 0,3 et 3 moles par litre de préférence entre 0,5 à 1,5 moles/litre.

A titre de matières premières, on peut faire appel à une solution de nitrate cérique obtenue par action de l'acide nitrique sur un oxyde cérique hydraté préparé d'une manière classique, par exemple, par action de l'acide nitrique sur le carbonate céreux et addition d'une solution d'ammoniaque en présence d'un agent oxydant, de préférence, l'eau oxygénée.

La solution de nitrate cérique obtenue selon le procédé d'oxydation électrolytique d'une solution de nitrate céreux et qui est décrite dans FR-A 2570087 (n° 84 13641) constitue une matière première de choix.

Le milieu d'hydrolyse est constitué par de l'eau dont la nature n'est pas critique et qui est, de préférence, de l'eau distillée ou permutée.

L'acidité peut être apportée par ajout d'un acide minéral. D'une manière préférentielle, on choisit l'acide nitrique. On peut utiliser un acide qui peut être concentré ou dilué, par exemple, jusqu'à $10^{-2}$ N.

Elle peut également provenir de la solution de nitrate cérique qui peut être légèrement acide et avoir une normalité variant entre 0,01 N et 5 N de préférence entre 0,1 N et 1 N.

La quantité d'ions H+ introduite pour la réaction d'hydrolyse est telle que le rapport molaire $[H^+]/[Ce^{IV}$ éq.] est supérieur ou égal à 0 et inférieur ou égal à 3.

On choisit, de préférence, un rapport molaire $[H^+]/[Ce^{IV}$ éq.] compris entre 0,4 et 2,5.

La proportion entre la solution aqueuse de sel de cérium IV et le milieu d'hydrolyse (essentiellement l'eau) est telle que la concentration finale équivalente en cérium IV est comprise entre 0,1 mole/litre et 1 mole/litre, de préférence, entre 0,2 et 0,6 mole/litre.

On définit la concentration finale équivalente en cérium IV par l'équation suivante :

4

$$[Ce^{IV} \text{ éq.}] = \frac{[Ce^{IV}] \times V'}{V + V'}$$

dans laquelle :

— $[Ce^{IV}]$ est la concentration en moles/litre de la solution du sel de cérium IV

— V représente le volume d'eau éventuellement additionné d'acide

— V' représente le volume de la solution de cérium IV.

L'hydrolyse du sel cérium IV réalisée dans les conditions telles que décrites précédemment est effectuée entre 70°C et 120°C et de préférence à la température de reflux du milieu réactionnel qui se situe vers 100°C. Il est plus aisé de travailler à la température de reflux qui est facile à contrôler et à reproduire.

On peut mettre en oeuvre le procédé de préparation du composé de formule (I) selon plusieurs variantes. Par exemple, on peut additonner en une seule fois, graduellement ou en continu la solution de sel de cérium IV dans l'eau contenant éventuellement de l'acide portée à la température réactionnelle ou inversement.

Selon un mode de préparation préféré, on mélange la solution de sel de cérium IV et le milieu d'hydrolyse puis l'on porte ledit mélange maintenu sous agitation à la température réactionnelle.

On peut également conduire le procédé en continu. A cet effet, on effectue simultanément et en continu le mélange de la solution de sel de cérium IV et du milieu d'hydrolyse et l'on chauffe en continu le mélange, à la température réactionnelle choisie.

La durée de la réaction d'hydrolyse peut varier entre 2 et 8 heures et de préférence, entre 3 et 6 heures. En fin d'opération, on observe la formation d'un précipité.

Le rendement de la réaction d'hydrolyse dépend de la concentration finale équivalente en cérium IV et du rapport molaire $[H]/[Ce^{IV} \text{ éq.}]$ : il est d'autant plus élevé que le milieu réactionnel est plus dilué et que le rapport molaire $[H^+]/[Ce^{IV} \text{ éq.}]$ est faible. A titre d'exemples on précisera qu'il se situe entre 100 et 25% pour une concentration finale équivalente en cérium IV égale à 0,35 mole/litre et un rapport molaire $[H^+]/[Ce^{IV} \text{ éq.}]$ allant de 0 à 2,5.

La deuxième étape du procédé consiste à séparer après réaction la masse réactionnelle qui se présente sous la forme d'une suspension dont la température se situe le plus souvent entre 90°C et 100°C. Cette opération est effectuée avant ou après refroidissement de la masse réactionnelle à température ambiante c'est-à-dire le plus souvent entre 10°C et 25°C.

On sépare le précipité selon les techniques classiques de séparation solide-liquide : filtration, décantation, essorage et centrifugation.

Le précipité séparé suite à l'étape d'hydrolyse peut être mis en oeuvre tel quel dans le procédé de l'invention. Dans ce cas, le produit obtenu répond à la formule (Ia) :

$$Ce(OH)_x(NO_3)_y, nH_2O \quad (Ia)$$

dans laquelle :

— x est tel que $x = 4 - y$

— y est compris entre 0,35 et 0,7

— n est supérieur à 0 et inférieur ou égal à environ 20

L'hydroxyde cérique défini par la formule (Ia) correspond à un composé de formule (I) dans laquelle p est égal à 0 et n est supérieur à 0 et inférieur ou égal à environ 20.

Il contient une teneur en eau libre très variable qui dépend de la technique de séparation et des conditions de séparation, par exemple, durée de l'essorage du gâteau de filtration. Généralement, le précipité séparé est un composé de formule (I) dans lequel p est égal à 0 et, de préférence, n est supérieur à 0 et inférieur à 10.

Il est également possible de mettre en oeuvre dans un procédé de l'invention, l'hydroxyde cérique résultant du traitement thermique du précipité séparé.

En soumettant le précipité séparé à une étape de séchage en contrôlant les paramètres durée et température, on obtient selon un accroissement de ces paramètres, un hydroxyde cérique répondant à la formule (Ia) dans laquelle p est égal à 0, n est supérieur à 0 et inférieur ou égal à environ 20, un hydroxyde cérique répondant à la formule (Ib) correspondant à un composé de formule (I) dans laquelle n et p sont égaux à 0, un hydroxyde cérique répondant à la formule (Ic) correspondant à un composé de formule (I) dans laquelle n est égal à 0 et p est supérieur à 0.

Plus précisément, l'hydroxyde cérique est représenté par la formule (Ib) qui est la suivante :

$$Ce(OH)_x(NO_3)_y \quad (Ib)$$

5

dans ladite formule :

— x est tel que x = 4 − y

— y est compris entre 0,35 et 0,7

— la teneur en cérium exprimée en % de $CeO_2$ est comprise entre 77 et 72%.

Si les conditions de séchage sont plus poussées et que la teneur en $CeO_2$ dépasse 72% pour y = 0,7, 77% pour y = 0,35 et une valeur comprise entre 77 et 72% pour y compris entre 0,35 et 0,7, on peut représenter le composé obtenu par la formule suivante (Ic) qui met en évidence la présence d'oxyde cérique :

$$Ce(OH)_x(NO_3)_y, pCeO_2 \qquad (Ic)$$

dans ladite formule :

— x est tel que x = 4 − y

— y est compris entre 0,35 et 1,5

— p est supérieur à 0 et inférieur ou égal à 2,0

Les conditions de séchage peuvent varier dans de larges limites. C'est ainsi que la température peut varier entre 15°C et 100°C de préférence entre la température ambiante et 50°C. La durée de séchage est choisie de préférence entre 5 et 48 heures afin d'obtenir un produit sec (n = 0). L'opération de séchage peut être faite à l'air ou sous pression réduite, par exemple, entre 1 et 10 mm de mercure (133,322 Pa et 1333,22 Pa).

Parmi les différents hydroxydes cériques répondant à la formule (I), le composé répondant à la formule (Ia) constitue une matière première de choix pour la mise en oeuvre du procédé de l'invention.

Conformément à la présente invention, on soumet l'hydroxyde cérique de formule (I) préparé par hydrolyse d'un sel nitrate de cérium IV à un traitement d'autoclavage, avant d'effectuer l'opération de calcination.

A cet effet, on met en oeuvre l'hydroxyde cérique sous forme de suspension dans un milieu liquide.

Parmi les liquides susceptible d'être utilisés, on peut mettre en oeuvre, l'eau. Dans ce cas, le composé de formule (I) dispersé à faible concentration exprimée en $CeO_2$, de préférence inférieure à 1 mole/litre, en milieu aqueux conduit à une dispersion colloïdale ou sol dont la taille des colloïdes définie par le diamètre moyen hydrodynamique des colloïdes peut varier entre 10 nm (100 Å) et 100 nm (1000 Å). Le diamètre moyen hydrodynamique des colloïdes est déterminé par diffusion quasi-élastique de la lumière selon la méthode décrite par Michael L. Mc Connell dans ANALYTICAL CHEMISTRY — 53, n° 81007 A (1981).

A titre de milieu liquide, on fait appel également à une solution aqueuse d'une base décomposable dans les conditions de calcination de l'invention.

On entend par base décomposable, un composé présentant un $pk_b$ inférieur à 7 et susceptible de se décomposer dans les conditions de calcination de l'invention.

A titre illustratif de ces dernières, on peut citer l'ammoniaque, l'urée, l'acétate d'ammonium, l'hydrogénocarbonate d'ammonium, le carbonate d'ammonium, ou une amine primaire, secondaire, tertiaire, comme, par exemple, la méthylamine, l'éthylamine, la propylamine, la n-butylamine, la sec-butylamine, la n-pentylamine, l'amino-2 pentane, l'amino-2 méthyl-2 butane, l'amino-1 méthyl-3 butane, le diamino-1,2 éthane, le diamino-1,2 propane, le diamino-1,3 propane, le diamino-1,4 butane, le diamino-1,5 pentane, le diamino-1,6 hexane, la diméthylamine, la diéthylamine, la triméthylamine, la triéthylamine ou une amine quaternaire comme, par exemple, un hydroxyde de tétraalkylammonium ayant de préférence des radicaux alkyle contenant de 1 à 4 atomes de carbone et l'on fait appel plus particulièrement à l'hydroxyde de tétraméthylammonium ou l'hydroxyde de tétraéthylammonium.

On peut également mettre en oeuvre un mélange de bases.

On fait appel, de préférence, à une solution d'ammoniaque, d'hydroxyde de tétraalkylammonium ou leurs mélanges.

Lorsque le milieu liquide est une solution basique, la concentration de celle-ci n'est pas un facteur critique selon l'invention. Elle peut varier dans de larges limites, par exemple, entre 0,1 et 11 N, mais il est préférable de faire appel à des solutions dont la concentration varie entre 1 et 10 N.

Dans le milieu liquide, la concentration de l'hydroxyde cérique exprimée en $CeO_2$ peut varier entre 0,3 et 6 moles/litre, de préférence, entre 2 et 3 moles/litre.

L'opération d'autoclavage est effectuée à une température située entre la température de reflux et la température critique du mélange réactionnel. On choisit de préférence une température comprise entre 100°C et 350°C, et encore plus préférentiellement, entre 150°C et 350°C.

La montée en température s'effectue à une vitesse qui n'est pas critique. On atteint la température réactionnelle en chauffant par exemple entre 30 minutes et 4 heures.

On peut conduire le procédé de l'invention, en introduisant l'hydroxyde cérique en suspension dans le milieu liquide dans une enceinte close, la pression ne résulte donc que du chauffage du mélange réactionnel.

EP 0 300 853 B1

Dans les conditions de températures données ci-dessus, et en milieu aqueux, on peut préciser, à titre illustratif que la pression varie entre 1($10^5$ Pa) et 165 Bars (165.$10^5$ Pa) de préférence entre 5(5. $10^5$ Pa) et 165 Bars (165.$10^5$Pa).

Il est également possible d'exercer une pression extérieure qui s'ajoute alors à celle consécutive au chauffage.

La durée de l'opération d'autoclavage n'est pas critique. Elle peut varier entre 30 minutes et 6 heures.

A la fin de celle-ci, on laisse refroidir à l'inertie du système et l'on ramène le système à la pression atmosphèrique.

On sépare le produit en suspension dans le milieu liquide selon les techniques classiques de séparation solide-liquide telles que décantation, essorage, filtration et/ou centrifugation.

Le produit recueilli peut être éventuellement soumis à un lavage, de préférence à l'eau, et/ou un séchage dans les conditions telles que précédemment décrites.

Selon une dernière étape du procédé de l'invention, on calcine le produit obtenu à une température comprise entre 300°C et 1000°C et, de préférence, choisie entre 350°C et 800°C.

La durée de la calcination peut varier dans de larges limites entre 30 minutes et 10 heures et, de préférence, entre 2 et 6 heures.

La mise en oeuvre du procédé de l'invention conduit à l'obtention d'un oxyde cérique qui présente une surface spécifique d'au moins 15 $m^2$/g, mesurée après calcination à une température comprise entre 800°C et 900°C. La surface spécifique de l'oxyde obtenu varie, généralement, entre 20 et 60 $m^2$/g et, plus particulièrement, entre 20 et 35 $m^2$/g, mesurée après calcination à une température de 800°C.

L'oxyde cérique obtenu selon le procédé de l'invention présente une grande surface spécifique à haute température si bien qu'il convient tout-à-fait bien pour le domaine de la catalyse, comme catalyseur ou comme support catalytique.

Il est particulièrement bien adapté pour être employé comme support catalytique dans les réactions de traitement des gaz d'échappement des moteurs à combustion interne.

Les exemples qui suivent illustrent l'invention sans toutefois la limiter.

L'essai A est donné à titre comparatif : il ne fait pas intervenir un traitement d'autoclavage.

Exemple 1 —

1. Synthèse de l'hydroxyde cérique Essai A

Dans un ballon tricol de 2 litres muni d'un thermomètre, d'un dispositif d'agitation, d'un système d'introduction de réactifs, d'un réfrigérant ascendant et équipé également d'un dispositif de chauffage, on introduit à 100°C, dans 1425 $cm^3$ d'eau distillée, en 3 heures :

— 574 $cm^3$ d'une solution de nitrate cérique contenant 1,18 moles/litre de cérium IV, 0,06 mole/litre de cérium III et ayant une acidité libre de 0,8 N.

Dans le milieu d'hydrolyse, la concentration en cérium IV exprimée en $CeO_2$ est égale à 60 g/litre et le rapport molaire $H^+$/$Ce^{IV}$ éq. est égal à 0,68.

On maintient le milieu réactionnel sous agitation et au reflux pendant 3 heures.

On effectue la filtration sur Büchner.

On recueille 179 g d'un précipité jaune répondant à la formule (Ia).

L'analyse chimique du produit obtenu présente la composition chimique suivante :

— perte au feu =                39,2%
— $CeO_2$=                     60,8%
— rapport molaire $NO_3^-$/$Ce^{IV}$ =    0,44

On détermine un rendement de réaction d'hydrolyse de 94%.

2. Autoclavage de l'hydrolyse cérique

Dans un bécher de 100 $cm^3$ de forme haute, on introduit successivement 30 $cm^3$ d'eau désionisée et 30 g de l'hydroxyde cérique préparé précédemment.

Après homogénéisation de ce dernier dans son milieu, le bécher est placé dans un autoclave de volume utile de 0,5 l environ.

L'ensemble est porté à 200°C, soit environ 16 bars (16.$10^5$ Pa), pendant 3 heures au moyen de chauffage approprié.

7

A la fin de ce traitement hydrothermal, on filtre le précipité sur Büchner.

On soumet ensuite deux fractions de ce produit humide à une opération de calcination dans les conditions suivantes : 2 heures à 350°C et 1 heure à 800°C.

La surface spécifique est déterminée selon la méthode définie dans la description.

Le volume poreux correspondant aux pores de diamètre inférieur à 60 nm (600 Å) est mesuré au porosimètre à mercure selon la norme ASTM D4284-83 ou suivant la méthode des isothermes d'adsorption d'azote, méthode B.E.T. précitée.

Les résultats obtenus sont donnés dans le tableau I. A titre comparatif, on indique ceux d'un oxyde cérique préparé par calcination directe à 350°C pendant 2 heures et à 800°C pendant 1 heure, de l'hydroxyde cérique synthétisé sous 1 (essai A).

**Tableau I**

| | Température de calcination °C | Surface spécifique $m^2/g$ | Volume poreux $cm^3/g$ |
|---|---|---|---|
| Exemple 1 | 350 800 | 98 29 | 0,103 0,100 |
| Essai A (sans autoclavage) | 350 800 | 90 4,6 | 0,040 0,025 |

On constate que le traitement d'autoclavage d'un hydroxyde cérique préparé par hydrolyse d'une solution de nitrate cérique permet d'accéder à un oxyde cérique ayant une grande surface spécifique, mesurée après calcination à une température de 800°C.

Exemple 2

1. Synthèse de l'hydroxyde cérique :

Elle est effectuée conformément au mode opératoire de l'exemple 1.1.

2. Autoclavage de l'hydroxyde cérique :

Selon le protocole opératoire décrit dans l'exemple 1, on soumet 30 g de l'hydroxyde cérique préparé ci-dessus, mis en suspension dans 30 $cm^3$ d'une solution aqueuse d'ammoniaque 1N à un traitement en autoclave à 200°C pendant 4 heures.

A la fin de ce traitement hydrothermal, on filtre le précipité sur Büchner.

On soumet ensuite deux fractions de ce produit humide à une opération de calcination dans les conditions suivantes : 2 heures à 350°C et 1 heure à 800°C.

On rassemble les résultats obtenus dans le tableau II. A titre comparatif, on reporte ceux d'un oxyde cérique preparé par calcination directe de l'hydroxyde cérique synthétisé sous 1 (essai A).

EP 0 300 853 B1

Tableau II

|  | Température de calcination °C | Surface spécifique m²/g | Volume poreux cm³/g |
|---|---|---|---|
| Exemple 2 | 350 800 | 105 25 | 0,105 0,08 |
| Essai A (sans auto-clavage) | 350 800 | 90 4,6 | 0,040 0,025 |

## Revendications

1. Procédé d'obtention d'un oxyde cérique présentant une surface specifique d'au moins 15 m²/g mesurée après calcination à une température comprise entre 800°C et 900°C caractérisé par le fait qu'il consiste :
— à mettre en suspension dans l'eau ou dans une solution aqueuse d'une base décomposable, un hydroxyde cérique répondant à la formule générale (I)

$$Ce(OH)_x(NO_3)_y, pCeO_2, nH_2O \quad (I)$$

dans laquelle :
— x est tel que x = 4 − y
— y est compris entre 0,35 et 1,5
— p est supérieur ou égal à 0 et inférieur ou égal à 2,0
— n est supérieur ou égal à 0 et inférieur ou égal à environ 20
— à le chauffer dans une enceinte close jusqu'à une température et une pression inférieures respectivement à la température critique et à la pression critique dudit milieu (autoclavage),
— à refroidir le milieu réactionnel et à le ramener à la pression atmosphérique,
— à séparer l'hydroxyde cérique ainsi traité,
— puis à le calciner.

2. Procédé selon la revendication 1 caractérisé par le fait que l'hydroxyde cérique est un composé répondant à la formule (Ia)

$$Ce(OH)_x(NO_3)_y, nH_2O \quad (Ia)$$

dans laquelle :
— x est tel que x = 4 − y
— y est compris entre 0,35 et 0,7
— n est supérieur à 0 et inférieur ou égal à environ 20.

3. Procédé selon la revendication 2 caractérisé par le fait que l'hydroxyde cérique et un composé répondant à la formule (Ia) dans laquelle n est supérieur à 0 et inférieur à environ 10.

4. Procédé d'obtention d'un oxyde cérique présentant une surface spécifique d'au moins 15 m²/g mesurée après calcination à une température comprise entre 800°C et 900°C caractérisé par le fait qu'il consiste :
— à mettre en suspension dans l'eau ou dans une solution aqueuse d'une base décomposable, un hydroxyde cérique obtenu selon un procédé qui consiste à hydrolyser une solution aqueuse d'un sel de cérium IV en milieu acide, à séparer le précipité obtenu et éventuellement à le traiter thermiquement,
— à le chauffer dans une enceinte close jusqu'à une température et une pression inférieures respective-

9

ment à la température critique et à la pression critique dudit milieu (autoclavage),

— à refroidir le milieu réactionnel et à le ramener à la pression atmosphérique,

— à séparer l'hydroxyde cérique ainsi traité,

— puis à le calciner.

5. Procédé selon la revendication 4 caractérisé par le fait que l'hydroxyde cérique est préparé par hydrolyse d'une solution aqueuse de nitrate cérique.

6. Procédé selon la revendication 5 caractérisé par le fait que la solution aqueuse de sel de cérium IV est une solution provenant de l'oxydation électrochimique d'une solution de nitrate céreux ou une solution obtenue par action de l'acide nitrique sur un oxyde cérique hydraté.

7. Procédé selon l'une des revendications 5 et 6 caractérisé par le fait que la concentration de la solution de sel de cérium exprimée en cérium IV est comprise entre 0,3 et 3 moles par litre.

8. Procédé selon l'une des revendications 5 à 7 caractérisé par le fait que le milieu d'hydrolyse est de l'eau distillée ou permutée.

9. Procédé selon l'une des revendications 5 à 8 caractérisé par le fait que le rapport molaire $[H^+]/[Ce^{IV}$ éq.$]$ est supérieur ou égal à 0 et inférieur ou égal à 3.

10. Procédé selon la revendication 9 caractérisé par le fait que ledit rapport est compris entre 0,4 et 2,5.

11. Procédé selon la revendication 9 caractérisé par le fait que l'acidité est apportée par de l'acide nitrique.

12. Procédé selon la revendication 9 caractérisé par le fait que l'acidité est apportée par une solution de nitrate cérique ayant une acidité de 0,01 N à 5 N.

13. Procédé selon l'une des revendications 4 à 12 caractérisé par le fait que la proportion entre la solution aqueuse de sel de cérium IV et le milieu d'hydrolyse est telle que la concentration finale équivalente en cérium IV est comprise entre 0,1 et 1,0 mole/litre.

14. Procédé selon la revendication 13 caractérisé par le fait que la concentration finale équivalente en cérium IV est comprise entre 0,2 et 0,6 mole/litre.

15. Procédé selon l'une des revendications 4 à 14 caractérisé par le fait que la température du milieu réactionnel est comprise entre 70°C et 120°C environ.

16. Procédé selon l'une des revendications 4 à 15 caractérisé par le fait que l'on additionne en une seule fois, graduellement ou en continu la solution de sel de cérium IV dans l'eau contenant éventuellement de l'acide portée à la température réactionnelle ou que l'on mélange la solution de sel de cérium IV et le milieu d'hydrolyse puis l'on porte ledit mélange maintenu sous agitation à la température réactionnelle ou que l'on effectue simultanément et en continu le mélange de la solution de sel de cérium IV et du milieu d'hydrolyse et que l'on chauffe en continu le mélange à la température réactionnelle.

17. Procédé selon l'une des revendications 4 à 16 caractérisé par le fait que la durée de la réaction d'hydrolyse varie entre 2 et 8 heures.

18. Procédé selon la revendication 1 caractérisé par le fait que la base décomposable est l'ammoniaque, l'urée, l'hydrogénocarbonate d'ammonium, le carbonate d'ammonium, une amine primaire, secondaire, tertiaire ou quaternaire ou leurs mélanges.

19. Procédé selon la revendication 18 caractérisé par le fait que la base décomposable est l'ammoniaque, un hydroxyde de tétraalkylammonium ou leurs mélanges.

20. Procédé selon l'une des revendications 18 et 19 caractérisé par le fait que la concentration de la solution basique varie entre 1 et 10 N.

21. Procédé selon l'une des revendications 1 à 20 caractérisé par le fait que la concentration de l'hydroxyde cérique exprimée en $CeO_2$ varie entre 0,3 et 6 moles/litre.

22. Procédé selon la revendication 21 caractérisé par le fait que ladite concentration est comprise entre 2 et 3 moles/litre.

23. Procédé selon l'une des revendications 1 à 22 caractérisé par le fait que la température d'autoclavage varie entre 100 et 350°C.

24. Procédé selon la revendication 23 caractérisé par le fait que ladite température est comprise entre 150 et 350°C.

25. Procédé selon l'une des revendications 1 à 24 caractérisé par le fait que la pression varie entre 1 ($10^5$ Pa) et 165 bars ($165.10^5$ Pa).

26. Procédé selon la revendication 25 caractérisé par le fait que ladite pression est comprise entre 5 ($5.10^5$ Pa) et 165 bars ($165.10^5$ Pa).

27. Procédé selon l'une des revendications 1 à 26 caractérisé par le fait que la durée de l'autoclavage varie entre 30 minutes et 6 heures.

28. Procédé selon l'une des revendications 1 à 27 caractérisé par le fait que la température de calcination est comprise entre 300 et 1000°C.

29. Procédé selon la revendication 28 caractérisé par le fait que ladite température est comprise entre 350 et 800°C.

30. Procédé selon l'une des revendications 28 et 29 caractérisé par le fait que la durée de calcination varie entre 2 et 6 heures.

## Patentansprüche

1. Verfahren zur Herstellung eines Ceroxids, das eine spezifische Oberfläche von mindestens 15 $m^2/g$ aufweist, gemessen nach dem Brennen bei einer Temperatur im Bereich von 800 bis 900°C, dadurch gekennzeichnet, daß man

— in Wasser oder in einer wäßrigen Lösung einer zersetzbaren Base ein Cerhydroxid der allgemeinen Formel (I)

$$Ce(OH)_x(NO_3)_y, pCeO_2, nH_2O$$

in der

— x so ist, daß x = 4 − y
— y zwischen 0,35 und 1,5 liegt
— p größer oder gleich 0 und kleiner oder gleich 2,0 ist
— n größer oder gleich 0 und kleiner oder gleich etwa 20 ist suspendiert,

— es in einem geschlossenen Raum bis auf eine Temperatur und einen Druck unterhalb der kritischen Temperatur und dem kritischen Druck des Mediums erhitzt (im Autoklaven behandelt),
— das Reaktionsgemisch abkühlt und auf Atmosphärendruck zurückführt,
— das so behandelte Cerhydroxid abtrennt und
— es brennt.

2. Verfahren nach Anspruch 1, dadurch gekennzeichnet, daß das Cerhydroxid eine Verbindung der Formel (Ia) ist

$$Ce(OH)_x(NO_3)_{y'}, nH_2O \qquad (Ia)$$

in der

— x so ist, daß x = 4 − y
— y zwischen 0,35 und 0,7 liegt
— n größer 0 und kleiner oder gleich etwa 20 ist.

3. Verfahren nach Anspruch 2, dadurch gekennzeichnet, daß das Cerhydroxid eine Verbindung der Formel (Ia) ist, in der n größer 0 und kleiner etwa 10 ist.

4. Verfahren zur Herstellung eines Ceroxids, das eine spezifische Oberfläche von mindestens 15 $m^2/g$ aufweist, gemessen nach dem Brennen bei einer Temperatur im Bereich von 800 bis 900°C, dadurch gekennzeichnet, daß man

— in Wasser oder in einer wäßrigen Lösung einer zersetzbaren Base ein Cerhydroxid suspendiert, das nach einem Verfahren erhalten worden ist, welches darin besteht, daß man eine wäßrige Lösung eines Cer(IV)salzes in saurem Medium hydrolysiert, den erhaltenen Niederschlag abtrennt und gegebenenfalls ihn wärmebehandelt,

— es in einem geschlossenen Raum bis auf eine Temperatur und einen Druck unterhalb der kritischen Temperatur und dem kritischen Druck des Mediums erhitzt (im Autoklaven behandelt),
— das Reaktionsgemisch abkühlt und auf Atmosphärendruck zurückführt,
— das so behandelte Cerhydroxid abtrennt und
— es brennt.

5. Verfahren nach Anspruch 4, dadurch gekennzeichnet, daß das Cerhydroxid durch Hydrolyse einer wäßrigen Cernitratlösung hergestellt worden ist.

6. Verfahren nach Anspruch 5, dadurch gekennzeichnet, daß die wäßrige Cer(IV)salzlösung eine Lösung ist, die aus der elektrochemischen Oxidation einer Lösung von Cer(III)nitrat stammt oder eine Lösung ist, die durch Einwirkung von Salpetersäure auf ein Cer(IV)oxidhydrat erhalten worden ist.

7. Verfahren nach den Ansprüchen 5 und 6, dadurch gekennzeichnet, daß die Konzentration der Lösung an Cersalz, angegeben als Cer(IV), 0,3 bis 3 Mol/l beträgt.

8. Verfahren nach den Ansprüchen 5 bis 7, dadurch gekennzeichnet, daß das Hydrolysemedium destilliertes oder mit Ionenaustauscher behandeltes Wasser ist.

9. Verfahren nach einem der Ansprüche 5 bis 8, dadurch gekennzeichnet, daß das Molverhältnis [H⁺]/[Ce^IV Äq.] größer oder gleich 0 und kleiner oder gleich 3 ist.

10. Verfahren nach Anspruch 9, dadurch gekennzeichnet, daß das Verhältnis 0,4 bis 2,5 beträgt.

11. Verfahren nach Anspruch 9, dadurch gekennzeichnet, daß die Acidität durch Salpetersäure zugeführt wird.

12. Verfahren nach Anspruch 9, dadurch gekennzeichnet, daß die Acidität durch eine Lösung von Cer(IV) nitrat mit einer Acidität von 0,01 n bis 5 n zugeführt wird.

13. Verfahren nach einem der Ansprüche 4 bis 12, dadurch gekennzeichnet, daß das Verhältnis zwischen wäßriger Cer(IV)salzlösung und Hydrolysemedium so ist, daß die Cer(IV)-ÄquivalentEndkonzentration 0,1 bis 1,0 Mol/l beträgt.

14. Verfahren nach Anspruch 13, dadurch gekennzeichnet, daß die Cer(IV)-Äquivalent-Endkonzentration 0,2 bis 0,6 Mol/l beträgt.

15. Verfahren nach einem der Ansprüche 4 bis 14, dadurch gekennzeichnet, daß die Temperatur des Reaktionsmediums zwischen 70 und etwa 120°C liegt.

16. Verfahren nach einem der Ansprüche 4 bis 15, dadurch gekennzeichnet, daß man auf einmal, stufenweise oder kontinuierlich die wäßrige Cer(IV)salzlösung zugibt, die gegebenenfalls Säure enthält und die auf die Reaktionstemperatur gebracht worden ist, oder daß man die Cer(IV)salzlösung und das Hydrolysemedium vermischt und dieses Gemisch dann unter Rühren auf die Reaktionstemperatur bringt oder daß man gleichzeitig und kontinuierlich die Cer(IV)salzlösung und das Hydrolysemedium vermischt und das Gemisch kontinuierlich auf die Reaktionstemperatur erhitzt.

17. Verfahren nach einem der Ansprüche 4 bis 16, dadurch gekennzeichnet, daß die Dauer der Hydrolysereaktion 2 bis 8 Stunden beträgt.

18. Verfahren nach Anspruch 1, dadurch gekennzeichnet, daß die zersetzbare Base Ammoniak, Harnstoff, Ammoniumhydrogencarbonat, Ammoniumcarbonat, ein primäres, sekundäres, tertiäres oder quaternäres Amin oder ein Gemisch daraus ist.

19. Verfahren nach Anspruch 18, dadurch gekennzeichnet, daß die zersetzbare Base Ammoniak, ein Tetraalkylammoniumhydroxid oder ein Gemisch davon ist.

20. Verfahren nach den Ansprüchen 18 und 19, dadurch gekennzeichnet, daß die Konzentration der basischen Lösung 1 n bis 10 n beträgt.

21. Verfahren nach einem der Ansprüche 1 bis 20, dadurch gekennzeichnet, daß die Konzentration an Cer(IV)hydroxid, angegeben als CeO₂ 0,3 bis 6 Mol/l beträgt.

22. Verfahren nach Anspruch 21, dadurch gekennzeichnet, daß die Konzentration 2 bis 3 Mol/l beträgt.

23. Verfahren nach einem der Ansprüche 1 bis 22, dadurch gekennzeichnet, daß die Temperatur bei der Autoklavenbehandlung im Bereich von 100 bis 350°C liegt.

24. Verfahren nach Anspruch 23, dadurch gekennzeichnet, daß die Temperatur im Bereich von 150 bis 350°C liegt.

25. Verfahren nach einem der Ansprüche 1 bis 24, dadurch gekennzeichnet, daß der Druck im Bereich von 1 bar (1 × 10⁵ Pa) und 165 bar (165 × 10⁵ Pa) liegt.

26. Verfahren nach Anspruch 25, dadurch gekennzeichnet, daß der Druck 5 bar (5 × 10⁵ Pa) bis 165 bar (165 × 10⁵ Pa) beträgt.

27. Verfahren nach einem der Ansprüche 1 bis 26, dadurch gekennzeichnet, daß die Dauer der Autoklavenbehandlung 30 min bis zu 6 h beträgt.

28. Verfahren nach einem der Ansprüche 1 bis 27, dadurch gekennzeichnet, daß die Brenntemperatur 300 bis 1000°C beträgt.

29. Verfahren nach Anspruch 28, dadurch gekennzeichnet, daß die Temperatur 350 bis 800°C beträgt.

30. Verfahren nach einem der Ansprüche 28 bis 29, dadurch gekennzeichnet, daß die Brenndauer 2 bis 6 h beträgt.

## Claims

1. A process for producing a ceric oxide having a specific surface area of at least 15 m²/g as measured after calcination at a temperature of between 800°C and 900°C characterised in that it comprises :

— putting into suspension in water or an aqueous solution of a decomposable base a ceric hydroxide corresponding to general formula (I)

$$Ce(OH)_x(NO_3)_y, pCeO_2, nH_2O \quad (I)$$

wherein :

— x is such that x = 4 − y
— y is between 0.35 and 1.5
— p is higher than or equal to 0 and lower than or equal to 2.0 and
— n is higher than or equal to 0 and lower than or equal to about 20,
— heating it in an enclosed chamber to a temperature and a pressure which are respectively lower than the critical temperature and the critical pressure of said medium (autoclaving),
— cooling the reaction medium and returning it to atmospheric pressure,
— separating the ceric hydroxide treated in that way, and
— then calcinating it.

2. A process according to claim 1 characterised in that the ceric hydroxide is a compound corresponding to formula (Ia)

$$Ce(OH)_x(NO_3)_y \cdot nH_2O \qquad\qquad (Ia)$$

wherein :

— x is such that x = 4 − y
— y is between 0.35 and 0.7 and
— n is higher than 0 and lower than or equal to about 20.

3. A process according to claim 2 characterised in that the ceric hydroxide is a compound corresponding to the formula (Ia) in which n is higher than 0 and lower than about 10.

4. A process for producing a ceric oxide having a specific surface area of at least 15 m²/g as measured after calcination at a temperature of between 800°C and 900°C characterised in that it comprises :

— putting into suspension in water or an aqueous solution of a decomposable base a ceric hydroxide obtained by a process which comprises hydrolysing an aqueous solution of a cerium (IV) salt in an acid medium, separating the resulting precipitate and possibly subjecting it to a heat treatment,
— heating it in an enclosed chamber to a temperature and a pressure which are respectively lower than the critical temperature and the critical pressure of said medium (autoclaving),
— cooling the reaction medium and returning it to atmospheric pressure,
— separating the ceric hydroxide treated in that way, and
— then calcinating it.

5. A process according to claim 4 characterised in that the ceric hydroxide is prepared by hydrolysis of an aqueous solution of ceric nitrate.

6. A process according to claim 5 characterised in that the aqueous solution of ceric (IV) salt is a solution resulting from the electrochemical oxidation of a solution of cerous nitrate or a solution produced by the action of nitric acid on a hydrated ceric oxide.

7. A process according to one of claims 5 and 6 characterised in that the level of concentration of the cerium salt solution expressed as cerium (IV) is between 0.3 and 3 moles per litre.

8. A process according to one of claim 5 to 7 characterised in that the hydrolysis medium is distilled or permuted water.

9. A process according to one of claim 5 to 8 characterised in that the molar ratio $[H^+]/[Ce^{IV}q.]$ is higher than or equal to 0 and lower than or equal to 3.

10. A process according to claim 9 characterised in that said ratio is between 0.4 and 2.5.

11. A process according to claim 9 characterised in that acidity is provided by nitric acid.

12. A process according to claim 9 characterised in that acidity is provided by a solution of ceric nitrate having a degree of acidity of 0.01 N to 5 N.

13. A process according to one of claims 4 to 12 characterised in that the proportion between the aqueous solution of cerium (IV) salt and the hydrolysis medium is such that the final equivalent concentration in respect of cerium (IV) is between 0.1 and 1.0 mole/litre.

14. A process according to claim 13 characterised in that the final equivalent concentration in respect of cerium (IV) is between 0.2 and 0.6 mole/litre.

15. A process according to one of claims 4 to 14 characterised in that the temperature of the reaction medium is between about 70°C and 120°C.

16. A process according to one of claims 4 to 15 characterised by adding on one occasion, gradually or continuously, the solution of cerium (IV) salt in water possibly containing acid which is raised to the reaction temperature or mixing the Solution of cerium (IV) salt and the hydrolysis medium and then raising said mixing which is maintained in an agitated condition to the reaction temperature or by effecting simultaneously and continuously mixing of the solution of cerium (IV) salt and the hydrolysis medium and continuously heating the mixture to the reaction temperature.

17. A process according to one of claims 4 to 16 characterised in that the duration of the hydrolysis reaction varies between 2 and 8 hours.

18. A process according to claim 1 characterised in that the decomposable base is ammonia, urea, ammonium hydrogen carbonate, ammonium carbonate, a primary, secondary, tertiary or quaternary amine or mixtures thereof.

19. A process according to claim 18 characterised in that the decomposable base is ammonia, a tetralkyl ammonium hydroxide or mixtures thereof.

20. A process according to one of claims 18 and 19 characterised in that the level of concentration of the basic solution varies between 1 and 10 N.

21. A process according to one of claims 1 to 20 characterised in that the level of concentration of the ceric hydroxide expressed as $CeO_2$ varies between 0.3 and 6 moles/litre.

22. A process according to claim 21 characterised in that said concentration is between 2 and 3 moles/litre.

23. A process according to one of claims 1 to 22 characterised in that the autoclaving temperature varies between 100 and 350°C.

24. A process according to claim 23 characterised in that said temperature is between 150 and 350°C.

25. A process according to one of claims 1 to 24 characterised in that the pressure varies between 1 ($10^5$ Pa) and 165 bars ($165.10^5$ Pa).

26. A process according to claim 25 characterised in that said pressure is between 5 ($5.10^5$ Pa) and 165 bars ($165.10^5$ Pa).

27. A process according to one of claims 1 to 26 characterised in that the duration of the autoclaving operation varies between 30 minutes and 6 hours.

28. A process according to one of claims 1 to 27 characterised in that the calcination temperature is between 300 and 1000°C.

29. A process according to claim 28 characterised in that said temperature is between 350 and 800°C.

30. A process according to one of claims 28 and 29 characterised in that the duration of the calcination operation varies between 2 and 6 hours.